## Europäisches Patentamt

(19) **European Patent Office**

**Office européen des brevets**

(11) Veröffentlichungsnummer: **0 043 399**
**B1**

(12) # EUROPÄISCHE PATENTSCHRIFT

(45) Veröffentlichungstag der Patentschrift:
**23.11.83**

(21) Anmeldenummer: **80730048.8**

(22) Anmeldetag: **09.07.80**

(51) Int. Cl.³: **B 65 G 54/02,** B 65 G 17/46

(54) **Vorrichtung zum Fördern von ferromagnetischen Gegenständen.**

(43) Veröffentlichungstag der Anmeldung:
**13.01.82 Patentblatt 82/2**

(45) Bekanntmachung des Hinweises auf die Patenterteilung:
**23.11.83 Patentblatt 83/47**

(84) Benannte Vertragsstaaten:
**AT BE CH DE FR GB IT LI LU NL SE**

(56) Entgegenhaltungen:
**CH - A - 446 190**
**DE - A - 2 164 088**
**DE - A - 2 362 826**
**DE - B - 1 245 841**
**DE - B - 1 556 183**
**US - A - 2 708 022**

(73) Patentinhaber: **SPODIG, Heinrich, Dr.-Ing.,**
**Netteberge 202, D-4714 Selm-Bork (DE)**

(72) Erfinder: **SPODIG, Heinrich, Dr.-Ing., Netteberge 202,**
**D-4714 Selm-Bork (DE)**

(74) Vertreter: **Müller-Börner, Richard, Dipl.-Ing. et al,**
**Patentanwälte Müller-Börner, Wey & Körner**
**Podbielskiallee 68, D-1000 Berlin-Dahlem 33 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

### Vorrichtung zum Fördern von ferromagnetischen Gegenständen

Die Erfindung betrifft eine Vorrichtung zum Fördern von ferromagnetischen Gegenständen auf einem feststehenden Träger mittels unter diesem in einem Gehäuse umlaufender Dauermagnetleisten, die in dem Gehäuse mittels endlos über Kettenräder umlaufender Ketten geführt sind.

Derartige Dauermagnetleisten bestehen in bekannter Weise (CH-PS Nr. 446190) aus einem U-förmigen Grundkörper, der aus einer ferromagnetischen Platte mit Seitenwänden gebildet wird. Zwischen den Seitenwänden sind die Dauermagnete als Blockmagnete in abwechselnder Polfolge und mit zu den Seitenwänden paralleler Magnetisierungsrichtung angeordnet. Je nach der Anzahl der in Umlaufrichtung aufeinander folgenden Dauermagnetleisten wird die Dichte des Magnetfeldes auf der Förderfläche bestimmt, jedoch sind Mindestabstände in Abhängigkeit von der Grösse des Fördergutes einzuhalten, wobei der Zwischenraum zwischen den Dauermagnetleisten grösser sein soll als die Länge des Fördergutes.

Wird dieser Mindestabstand nicht eingehalten, werden die Dauermagnetleisten durch das Fördergut untereinander magnetisch kurzgeschlossen, was zur Folge hat, dass das Fördergut nicht mehr wie gewünscht transportiert, d.h. dass der Rutschvorgang unterbrochen wird.

Der Erfindung liegt die Aufgabe zugrunde, eine Vorrichtung zum Fördern von ferromagnetischen Gegenständen der eingangs genannten Art in der Weise weiter zu entwickeln, dass keine Abhängigkeit mehr zwischen der Grösse des Fördergutes und dem Abstand der Dauermagnetleisten besteht, wodurch es ermöglicht wird, praktisch jedes Fördergut, insbesondere auch jede Art von Spänen, z.B. feinste, mittlere, grössere, kleinere, sogar Spänegespinste bzw. Späneknäule unterschiedlos zu fördern.

Zur Lösung dieser Aufgabe wird eine Vorrichtung zum Fördern von ferromagnetischen Gegenständen vorgeschlagen, bei welcher erfindungsgemäss mehrere Dauermagnetleisten zu Gruppen zusammengefasst und miteinander zu mindestens einer umlaufenden Gruppe magnetisch und gelenkig verbunden sind. Dies bringt gleichzeitig den Vorteil mit sich, dass neben den neuen magnetischen Eigenschaften der gleichzeitige Austrag von Kühlflüssigkeit oder Öl mit dem Fördergut so gering wie möglich gehalten wird und somit der ungehinderte Verlust dieses wertvollen und teueren Mittels von vornherein weitestgehend ausgeschaltet wird.

Weiterbildungen der Erfindung sind in den Unteransprüchen angegeben.

Durch die erfindungsgemässe Magnetkonstruktion ist der bisherige Anwendungsbereich der bekannten Rutschförderer noch erweitert worden. So ist z.B. eine intermittierende Arbeitsweise etwa mittels Einsatz einer Zeituhr möglich, um einerseits eine höchstmögliche Förderleistung und andererseits eine zusätzliche Verbesserung der Trennwirkung des vom Fördergut mitgenommenen Kühlmittels oder Öls zu erreichen. Weiter ist ein kontinuierlicher Förderablauf sichergestellt, da die neue Magnetkonstruktion durch ihre robuste und verschleissfreie Ausführung praktisch frei von Störungen bzw. Ausfällen ist.

Einzelheiten, Vorteile und Anwendungen der Erfindung werden nachstehend anhand eines in der Zeichnung dargestellten Ausführungsbeispiels des Erfindungsgegenstandes näher erläutert. Es zeigen:

Fig. 1 eine Seitenansicht der in Übereinstimmung mit der Erfindung ausgebildeten Vorrichtung mit einzelnen, im Abstand voneinander angeordneten Gruppen der Dauermagnetleisten, wobei die Seitenschienen fortgelassen sind,

Fig. 2 einen Schnitt nach der Linie II-II der Fig. 1,

Fig. 3 einen Schnitt nach der Linie III-III der Fig. 1,

Fig. 4 eine Seitenansicht einer Gruppe von fünf Dauermagnetleisten,

Fig. 5 eine Draufsicht auf die Gruppe der Fig. 4, und

Fig. 6 eine Abwandlung der Fig. 1, bei der die Gruppen ohne Zwischenraum miteinander verbunden sind.

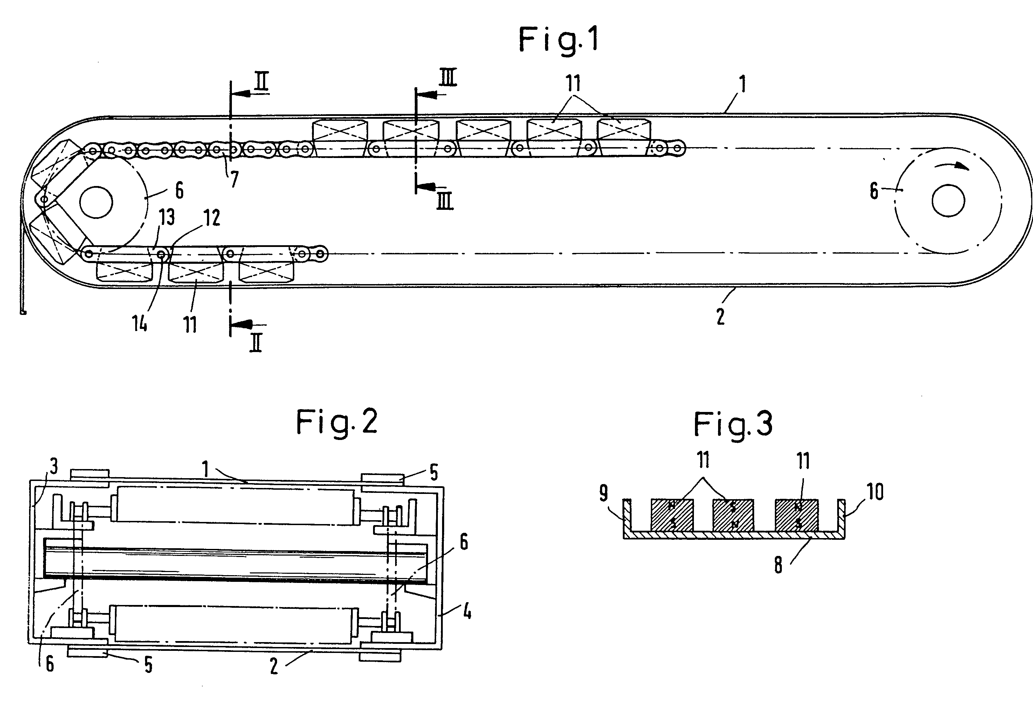

Der Förderer besteht in bekannter Weise aus einem im Querschnitt rechteckigen Gehäuse, das aus den nicht ferromagnetischen Gleit- bzw. Trägerplatten 1, 2 und den Seitenschienen 3, 4 gebildet wird. Die Gleit- bzw. Trägerplatten 1, 2 sind auf die im Gehäuseinneren sich gegenüberliegenden Flansche der Seitenschienen zusammen mit Halte- bzw. Begrenzungsschienen 5 aufgelegt und dichten das Gehäuse 1, 2, 3, 4 von aussen ab (Fig. 2).

Der Förderer besitzt ein Dauermagnetsystem, das sich aus einzelnen Dauermagnetleisten zusammensetzt, die in dem Gehäuse 1, 2, 3, 4 endlos über auf Kettenräder 6 umgelenkten, parallel laufenden Ketten 7 geführt sind.

Die Dauermagnetleisten, die aus einer ferromagnetischen Platte 8 mit Seitenwänden 9, 10 und zwischen den Seitenwänden mit wechselnder Polarität angeordneten Blockmagneten 11 bestehen (Fig. 3), sind nach dem Vorschlag der Erfindung in unmittelbarer Nachbarschaft zueinander zu mindestens einer umlaufenden Gruppe magnetisch und gelenkig miteinander verbunden. Das geschieht auf die Weise, dass die benachbarten Platten 8 scharnierartig quer zur Bewegungsrichtung aneinandergekoppelt werden. Zu diesem Zweck weisen die Platten 8 über ihre Längskanten vorstehende Scharnierösen 12, 13 in solcher Reihenfolge auf, dass die Scharnierösen 12, 13 benachbarter Platten 8 in einer Achsrichtung ineinandergreifen und ein gemeinsames Lager für einen Dorn 14 bilden. Auf diese Weise kann eine beliebig grosse Anzahl von Dauermagnetleisten 8, 9, 10, 11 zu einer grösseren oder kleineren Gruppe zusammengefasst werden, und zwar je nach den magnetischen Erfordernissen, die weitestgehend vom Fördergut abhängig sind bzw. bestimmt werden.

Die magnetische Verbindung der Platten 8 der einzelnen Dauermagnetleisten 8, 9, 10, 11 ergibt ein grossflächiges Magnetsystem mit einer Verstärkung des Magnetfeldes an den offenen Magnetpolen unmittelbar gegenüber dem feststehenden Träger 1, 2 für das Fördergut. Der Wirkungsgrad derartiger Rutschförderer wird dadurch in zweifacher Hinsicht verbessert. Einmal findet eine intensivere Filterung des Fördergutes aus Kühloder anderen Flüssigkeiten statt, und zum anderen ist die magnetische Haft- und Mitnahmekraft wesentlich stärker. Das erklärt auch, das alles Fördergut, soweit es ferromagnetisch ist, ob es gross oder klein ist, ob es aus einzelnen Teilen besteht oder zusammenhängend ist, wie z.B. Eisenspäne, unterschiedslos über die Förderstrecke gefördert werden können. Weiter ist praktisch ein kontinuierlicher Förderablauf sichergestellt, da die bei herkömmlichen Förderern vorkommende Unterbrechung des Rutschvorganges bei dem grossflächigen Magnetsystem so gut wie ausgeschaltet ist.

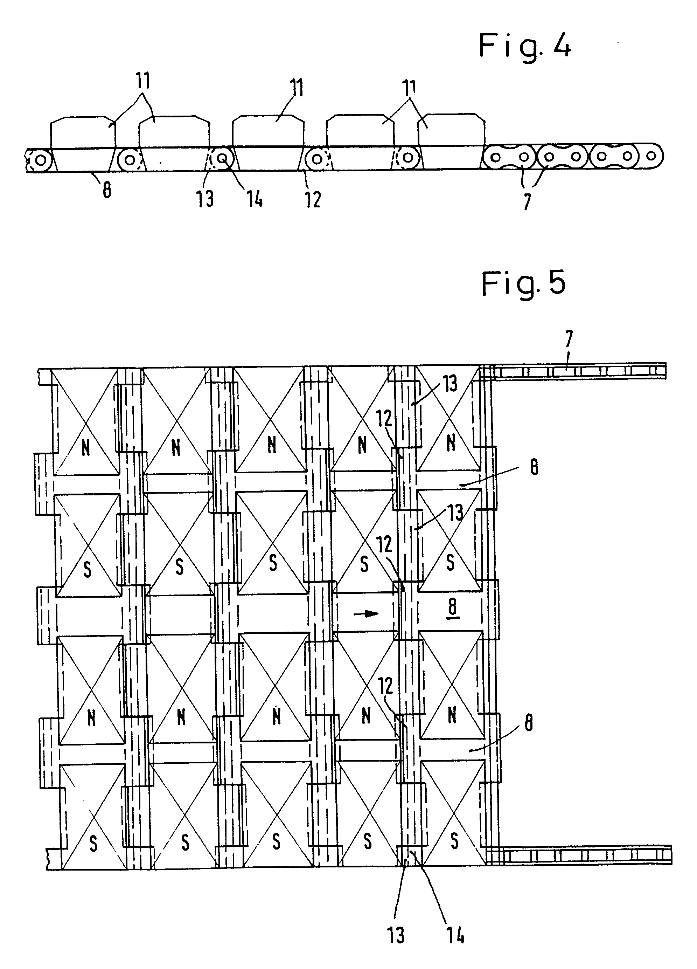

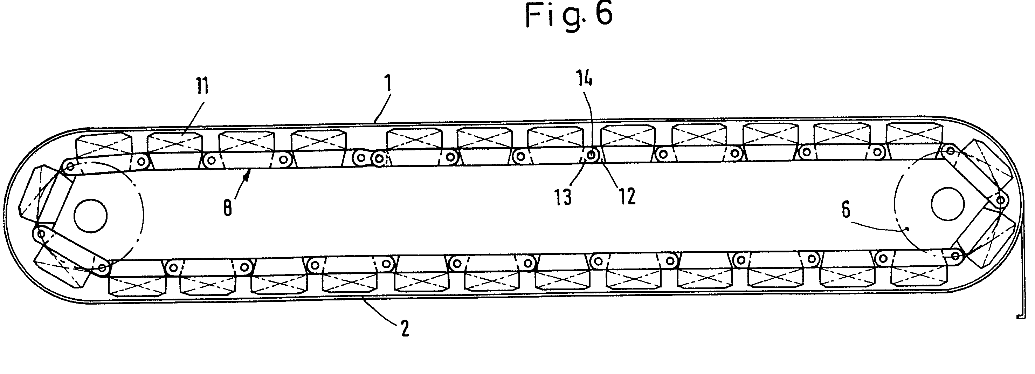

Bei einzelnen Gruppen von Dauermagnetleisten 8, 9, 10, 11 (Fig. 3 und 4) sind entweder durch Rollenketten 7 miteinander verbunden, wie Fig. 1 erkennen lässt, wo zwei Gruppen aus je fünf Dauermagnetleisten dargestellt sind, oder unmittelbar mittels ihrer Scharnierösen 12 und 13 aneinandergekoppelt, wie Fig. 6 erkennen lässt. Im Falle einzelner Gruppen (Fig. 1) bilden die über die Kettenräder 6 laufenden Teile der Magnetleisten bzw. ihrer Scharniere gewissermassen Bestandteile der Rollenketten 7.

Die gebildete Gruppe bietet weiter eine gute Voraussetzung für den Ablauf etwa am Fördergut haftender bzw. vom Fördergut mitgenommener Flüssigkeiten, z.B. Öl oder Kühlflüssigkeiten. Das ist besonders der Fall, wenn der Förderer nur mit einer Gruppe oder nur mit wenigen Gruppen ausgestattet ist.

Es ist bei Anwendung mehrerer umlaufenden Gruppen zweckmässig, die einzelnen Gruppen in Umlaufrichtung mit gleichen Abmessungen zu versehen bzw. den Abstand zweier Gruppen grösser als die Längsabmessung einer Gruppe zu halten. Dabei sind die einzelnen Gruppen durch die Rollenketten 7 miteinander verbunden, die sich an die Scharnierösen 13 der Platten 8 anschliessen. Dies ist ebenfalls gut in Fig. 1 erkennbar.

Selbstverständlich ist es auch möglich, die einzelnen Gruppen miteinander ohne Zwischenraum zu verbinden, so dass ein endloses Band entsteht, das auf der gesamten Umlaufbahn im Gegensatz zur Anordnung einzelner Gruppen keine magnetische Unterbrechung aufweist.

## Patentansprüche

1. Vorrichtung zum Fördern von ferromagnetischen Gegenständen auf einem feststehenden Träger mittels unter diesem in einem Gehäuse umlaufender Dauermagnetleisten (8, 9, 10), die in dem Gehäuse mittels endlos über Kettenräder (6) umlaufender Ketten (7) geführt sind, dadurch gekennzeichnet, dass mehrere Dauermagnetleisten zu Gruppen zusammengefasst und miteinander zu mindestens einer umlaufenden Gruppe magnetisch und gelenkig verbunden sind.

2. Vorrichtung nach Anspruch 1 mit Dauermagnetleisten, die aus einer ferromagnetischen Platte (8) mit Seitenwänden (9, 10) und zwischen den Seitenwänden mit wechselnder Polarität angeordneten Blockmagneten (11) bestehen, dadurch gekennzeichnet, dass benachbarte Platten (8) scharnierartig quer zur Bewegungsrichtung miteinander verbunden sind.

3. Vorrichtung nach Anspruch 2, dadurch gekennzeichnet, dass die Platten (8) über ihre Längskanten vorstehende Scharnierösen (12, 13) in solcher Reihenfolge aufweisen, dass die Scharnierösen benachbarter Platten in einer Achsrichtung ineinandergreifen und ein gemeinsames Lager für einen Dorn (14) bilden.

4. Vorrichtung nach den Ansprüchen 1 bis 3, dadurch gekennzeichnet, dass bei Anordnung mehrerer Gruppen die Abmessungen der einzelnen Gruppe in Umlaufrichtung gleich sind.

5. Vorrichtung nach Anspruch 4, dadurch gekennzeichnet, dass der Abstand zweier Gruppen in Umlaufrichtung grösser ist als die Längsabmessung einer Gruppe.

6. Vorrichtung nach den Ansprüchen 1 bis 3, dadurch gekennzeichnet, dass die Gruppen ohne Zwischenraum ebenfalls durch ein Scharnier miteinander verbunden sind.

## Revendications

1. Dispositif pour transporter des articles ferromagnétiques sur un support fixe au moyen de règles à aimants permanents (8, 9, 10) circulant sous celui-ci dans une enveloppe, les règles étant guidées dans l'enveloppe au moyen de chaînes (7) circulant sans fin sur des pignons (6), caractérisé en ce que plusieurs règles à aimants permanents sont réunies en groupes et qu'elles sont reliées entre elles d'une manière magnétique et articulées pour former au moins un groupe en circulation.

2. Dispositif suivant la revendication 1, comportant des règles à aimants permanents, qui sont composées d'une plaque ferromagnétique (8) comportant des parois latérales (9, 10), ainsi que des aimants blocs (11) disposés, à polarités alternées, entre les parois latérales, caractérisé en ce que des plaques voisines (8) sont reliées entre elles comme des charnières, perpendiculairement au sens de déplacement.

3. Dispositif suivant la revendication 2, caractérisé en ce que les plaques (8) présentent des œillets (12, 13) de charnières dépassant leurs bords longitudinaux dans une succession telle que les œillets de plaques voisines s'engagent l'un dans l'autre suivant une direction axiale et forment un palier commun pour un axe (14).

4. Dispositif suivant les revendications 1 à 3, caractérisé en ce que, pour une disposition en plusieurs groupes, les dimensions des différents groupes sont les mêmes dans le sens de la circulation.

5. Dispositif suivant la revendication 4, caractérisé en ce que la distance entre deux groupes, dans le sens de la circulation, est plus grande que la longueur d'un groupe.

6. Dispositif suivant les revendications 1 à 3, caractérisé en ce que les groupes sans espace intermédiaire sont reliés entre eux également par une charnière.

## Claims

1. Apparatus for conveying ferromagnetic objects on a rigid carrier by means of permanent magnet strips (8, 9, 10) which circulate under the latter in a housing and are guided in the housing by means of chains (7) endlessly circulating over chain wheels (6), characterized in that several permanent magnet strips are combined to form groups and are connected to one another magnetically and in an articulated manner to form at least one circulating group.

2. Apparatus as claimed in claim 1, with permanent magnet strips which consist of a ferromagnetic plate (8) with side walls (9, 10) and block magnets (11) disposed with alternating polarity between the side walls, characterized in that adjacent plates (8) are connected to one another in the form of hinges transverse to the direction of movement.

3. Apparatus as claimed in claim 2, characterized in that the plates (8) comprise hinge lugs (12, 13) projecting over the longitudinal edges thereof in such an arrangement that the hinge lugs of adjacent plates engage in one another in an axial direction and form a common bearing for a spindle (14).

4. Apparatus as claimed in claims 1 to 3, characterized in that in the case of the arrangement of a plurality of groups the dimensions of the individual groups in the direction of circulation are the same.

5. Apparatus as claimed in claim 4, characterized in that the distance between two groups in the direction of circulation is greater than the longitudinal dimension of one group.

6. Apparatus as claimed in claims 1 to 3, characterized in that the groups are connected to one another without an intermediate space likewise by means of a hinge.

0 043 399

Fig.1

Fig.2

Fig.3

# Fig. 4

# Fig. 5

# Fig. 6

0 043 399